# EUROPEAN PATENT APPLICATION

(11) **EP 2 787 567 A1**
(43) Date of publication of application: **08.10.2014**
(21) Application number: 12853953.3
(22) Date of filing: 16.11.2012
(51) Int. Cl.: H01M 8/04, H01M 8/10

(54) **FUEL-CELL SYSTEM**

(30) Priority: 28.11.2011 JP 2011259101
(71) Applicant: Nissan Motor Company, Limited, Kanagawa-ku Yokohama-shi Kanagawa 221-0023 (JP)
(72) Inventor: IKEZOE, Keigo, Atsugi-shi Kanagawa 243-0123 (JP); CHIKUGO, Hayato, Atsugi-shi Kanagawa 243-0123 (JP); ICHIKAWA, Yasushi, Atsugi-shi Kanagawa 243-0123 (JP)
(74) Representative: Grünecker, Kinkeldey, Stockmair & Schwanhäusser
(86) International application number: PCT/JP2012/079850
(87) International publication number: WO 2013/080814

(57) **Abstract**

In a fuel cell system including a load and a fuel cell stack connected to the load and supplying an anode gas and a cathode gas to the fuel cell stack to generate power according to the load, the fuel cell system includes, a pressure setting unit configured to set a pressure of the anode gas higher when the load is high as compared with when the load is low, a stagnation point determination unit configured to determine, according to a state of power generation of the fuel cell stack, whether or not a nitrogen stagnation point is left in a reaction flow path within the fuel cell stack, and an operation control unit configured to performs an operation while preventing the pressure of the anode gas from being lowered when a required load is lowered in a state where the nitrogen stagnation point is left.

## Description

### TECHNICAL FIELD

The present invention relates to fuel cell systems.

### BACKGROUND ART

JP2007-517369A discloses a fuel cell system in which the supply and stop of a high-pressure anode gas are repeated, and thus the pressure of the anode gas is pulsed. In such a fuel cell system, when the high-pressure anode gas is supplied, a power generation reaction occurs to consume the anode gas. Then, when the supply of the anode gas is stopped, the anode gas left in a reaction flow path is consumed by the power generation reaction. Then, the high-pressure anode gas is supplied again, and the anode gas is consumed by the power generation reaction. The operation as described above is repeated, and thus the anode gas is efficiently utilized without waste.

### SUMMARY OF INVENTION

In a case where the pressure of an anode gas is adjusted according to variations in required load, when the required load is increased, the degree of opening and the valve opening time of a pressure adjustment valve are increased. Consequently, high-pressure hydrogen is supplied from a hydrogen tank, and thus the pressure of the anode gas is rapidly increased. Hence, the time of a raising transient operation is short. However, when the required load is lowered, with the pressure adjustment valve closed, it is necessary to wait for the consumption of hydrogen by a power generation reaction. Hence, the time of a transient operation (lowering transient operation) when the pressure of the anode gas is lowered is long as compared with the time of the raising transient operation. In this lowering transient operation, it is likely that nitrogen in a buffer tank flows backward and is thereby left in the reaction flow path of the anode gas of an MEA. In this state, when the lowering transient operation is performed again, there is a possibility that the depletion of hydrogen facilitates the degradation of the MEA (electrolytic membrane).

The present invention is made, focusing on the conventional problem described above. The object of the present invention is to provide a fuel cell system that can prevent the degradation of a MEA (electrolytic membrane) caused by depletion of hydrogen.

According to an aspect of the fuel cell system of the present invention, the fuel cell system includes a load and a fuel cell stack connected to the load, and an anode gas and a cathode gas are supplied to the fuel cell stack to generate power according to the load. The fuel cell system includes, a pressure setting unit configured to set a pressure of the anode gas higher when the load is high as compared with when the load is low, a stagnation point determination unit configured to determine, according to a state of power generation of the fuel cell stack, whether or not a nitrogen stagnation point is left in a reaction flow path within the fuel cell stack, and an operation control unit configured to perform an operation while preventing the pressure of the anode gas from being lowered when a required load is lowered in a state where the nitrogen stagnation point is left.

Embodiments and advantages of the present invention will be described in detail below with respect to accompanying drawings.

### BRIEF DESCRIPTION OF DRAWINGS

[Fig. 1] Fig. 1 is a diagram schematically showing a first embodiment of a fuel cell system according to the present invention;
[Fig. 2A] Fig. 2A is an appearance perspective view illustrating a fuel cell stack; [Fig. 2B] Fig. 2B is an exploded view showing the structure of a power generation cell;
[Fig. 3A] Fig. 3A is a schematic view illustrating the reaction of an electrolytic membrane in the fuel cell stack;
[Fig. 3B] Fig. 3B is a schematic view illustrating the reaction of the electrolytic membrane in the fuel cell stack;
[Fig. 4] Fig. 4 is a diagram schematically showing the pressure of a reaction gas supplied to the fuel cell stack;
[Fig. 5] Fig. 5 is a diagram illustrating the mechanism of how the nitrogen stagnation point is produced;
[Fig. 6] Fig. 6 is a diagram schematically showing the concentration of hydrogen in the anode flow path of a MEA in the low load operation of Fig. 4;
[Fig. 7] Fig. 7 is a diagram schematically showing the concentration of hydrogen in the anode flow path of the MEA in the high load operation of Fig. 4;
[Fig. 8] Fig. 8 is a diagram illustrating a problem to be solved in the present embodiment;
[Fig. 9] Fig. 9 is a control flowchart that is performed by the controller of the first embodiment of the fuel cell system;
[Fig. 10] Fig. 10 is a flowchart showing a routine for determining whether or not the nitrogen stagnation point is left in the anode flow path of the MEA;
[Fig. 11] Fig. 11 is a diagram showing an example of a correlation between a pressure decrease ΔP and a distance to the nitrogen stagnation point from an exit;
[Fig. 12] Fig. 12 is a timing chart illustrating an operation when the control flowchart of the first embodiment is performed;
[Fig. 13] Fig. 13 is a control flowchart that is performed by the controller of a second embodiment of the fuel cell system according to the present invention; [Fig. 14] Fig. 14 is a diagram showing an example of a correlation between the pressure decrease ΔP and a current hydrogen concentration C1;
[Fig. 15] Fig. 15 is a diagram showing an example of a map for determining a hydrogen concentration C2 after the pressure is lowered according to the required load;
[Fig. 16] Fig. 16 is a timing chart illustrating an operation when the control flowchart of the second embodiment is performed; and
[Fig. 17] Fig. 17 is a diagram schematically showing a hydrogen concentration in the anode flow path of the MEA when the control flowchart of the second embodiment is performed.

### DESCRIPTION OF EMBODIMENTS

### (First embodiment)

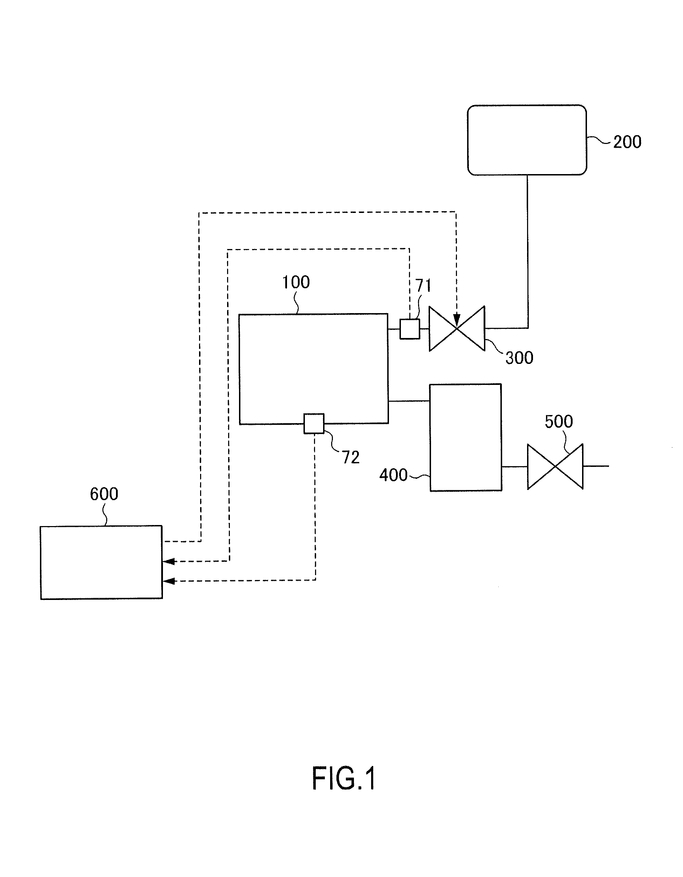

Fig. 1 is a diagram schematically showing a first embodiment of a fuel cell system according to the present invention.

The fuel cell system includes a fuel cell stack 100, a hydrogen tank 200, a pressure adjustment valve 300, a buffer tank 400, a purge valve 500 and a controller 600.

The fuel cell stack 100 receives the supply of a reaction gas (an anode gas H₂, a cathode gas O₂) to generate power. The details thereof will be described later.

The hydrogen tank 200 is a high-pressure gas tank that stores the anode gas H₂ in a pressurized state. The hydrogen tank 200 is provided at the most upstream position in an anode line.

The pressure adjustment valve 300 is provided downstream of the hydrogen tank 200. The pressure adjustment valve 300 adjusts the pressure of the anode gas H₂ newly supplied from the hydrogen tank 200 to the anode line. The pressure of the anode gas H₂ is adjusted by the degree of opening of the pressure adjustment valve 300.

The buffer tank 400 is provided downstream of the fuel cell stack 100. The buffer tank 400 stores the anode gas H₂ discharged from the fuel cell stack 100. Part (in particular, nitrogen N₂) of air flowing along a cathode flow path of the fuel cell stack passes through an electrolytic membrane to reach an anode flow path. The nitrogen N₂ is also discharged from the fuel cell stack 100 together with the anode gas H₂, and is stored in the buffer tank 400.

The purge valve 500 is provided downstream of the buffer tank 400. When the purge valve 500 is opened, the nitrogen N₂ is purged from the buffer tank 400 together with the anode gas H₂.

The controller 600 controls the operation of the pressure adjustment valve 300 based on the signals of a pressure sensor 71 provided in the anode line, a current/voltage sensor 72 provided in the fuel cell stack 100 and the like. Specific details of the control will be described later.

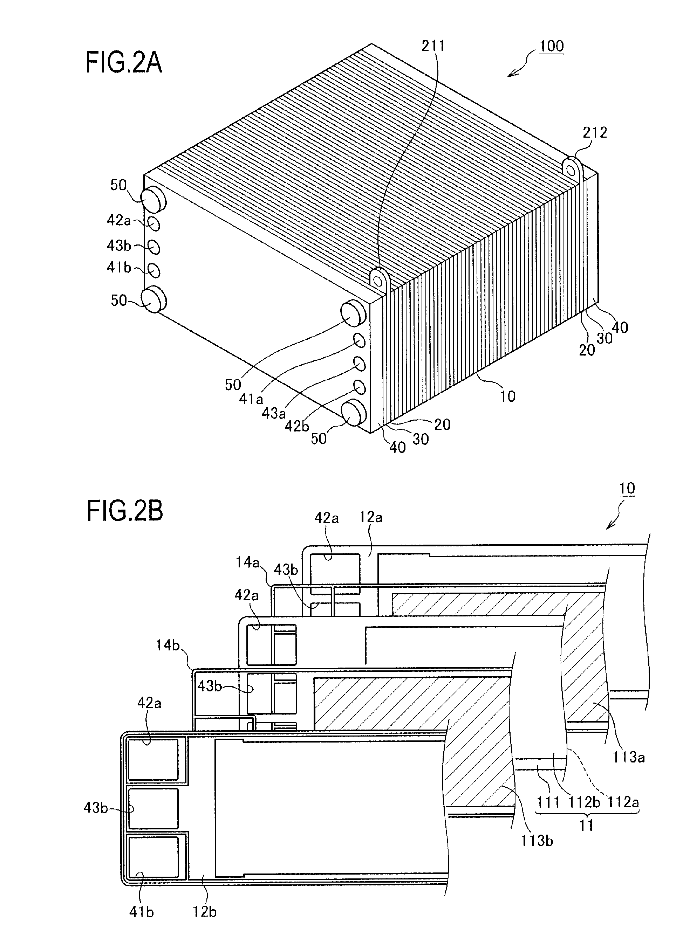

Fig. 2A is an appearance perspective view illustrating the fuel cell stack.

As shown in Fig. 2A, the fuel cell stack 100 includes a plurality of power generation cells 10 stacked in layers, power collection plates 20, insulation plates 30, end plates 40 and four tension rods 50.

The power generation cell 10 is a unit power generation cell of the fuel cell. Each of the power generation cells 10 generates an electromotive voltage of about 1 volts (V). The configuration of the power generation cell 10 will be described in detail later.

The power collection plates 20 are individually arranged on the outside of the power generation cells 10 stacked in layers. The power collection plate 20 is formed of a gas-impermeable conductive member, for example, dense carbon. The power collection plate 20 has a positive terminal 211 and a negative terminal 212. In the fuel cell stack 100, electrons e⁻ generated in each of the power generation cells 10 are taken out and output by the positive terminal 211 and the negative terminal 212.

The insulation plates 30 are individually arranged on the outside of the power collection plates 20. The insulation plate 30 is formed of an insulation member, for example, rubber.

The end plates 40 are individually arranged on the outside of the insulation plates 30. The end plate 40 is formed of a rigid metal material, for example, steel.

In the end plate 40 (in Fig. 2A, the end plate 40 on the left front) on one side, an anode supply port 41a, an anode discharge port 41b, a cathode supply port 42a, a cathode discharge port 42b, a cooling water supply port 43a and a cooling water discharge port 43b are provided. In the present embodiment, the anode supply port 41a, the cooling water supply port 43a and the cathode discharge port 42b are provided on the right side in the figure. The cathode supply port 42a, the cooling water discharge port 43b and the anode discharge port 41b are provided on the left side in the figure.

The tension rods 50 are individually arranged around the four corners of the end plate 40. In the interior of the fuel cell stack 100, through-holes (not shown) are formed. The tension rods 50 are inserted through the through-holes. The tension rod 50 is formed of a rigid metal material, for example, steel. In order to prevent an electrical short-circuit between the power generation cells 10, the surface of the tension rod 50 is insulated. A nut (not shown because it is at the back) is screwed onto the tension rod 50. The fuel cell stack 100 is tightened in the direction of the stacking by the tension rod 50 and the nut.

As a method of supplying hydrogen as the anode gas to the anode supply port 41a, for example, there are a method of directly supplying hydrogen gas from a hydrogen storage device, a method of improving the quality of a fuel containing hydrogen and supplying the hydrogen-containing gas whose quality has been improved and the like. As the hydrogen storage device, there are a high-pressure gas tank, a liquid hydrogen tank, a hydrogen storing alloy tank and the like. As the hydrogen-containing fuel, there are natural gas, methanol, gasoline and the like. In Fig. 1, a high-pressure gas tank is used. As the cathode gas supplied to the cathode supply port 42a, air is generally utilized.

Fig. 2B is an exploded view showing the structure of the power generation cell.

As shown in Fig. 2B, in the power generation cell 10, on both surfaces of an MEA (membrane electrode assembly) 11, an anode separator (anode bipolar plate) 12a and a cathode separator (cathode bipolar plate) 12b are arranged.

In the MEA 11, on both surfaces of an electrolytic membrane 111 formed with an ion exchange membrane, an electrode catalytic layer 112 is formed. On the electrode catalytic layer 112, a GDL (gas diffusion layer) 113 is formed.

The electrode catalytic layer 112 is formed with carbon black particles on which for example, platinum is supported.

The GDL 113 is formed with a member having sufficient gas diffusion and conductivity, for example, a carbon fiber.

The anode gas supplied through the anode supply port 41 a flows through the GDL 113a, reacts with the anode electrode catalytic layer 112 (112a) and is discharged through the anode discharge port 41b.

The cathode gas supplied through the cathode supply port 42a flows through the GDL 113b, reacts with the cathode electrode catalytic layer 112 (112b) and is discharged through the cathode discharge port 42b.

The anode separator 12a is overlaid on one surface (the back side of Fig. 2B) of the MEA 11 through the GDL 113a and a seal 14a. The cathode separator 12b is overlaid on the other surface (the front side of Fig. 2B) of the MEA 11 through the GDL 113b and a seal 14b. The seal 14 (14a, 14b) is, for example, a rubber elastic material such as silicon rubber, ethylene propylene rubber (ethylene propylene diene monomer; EPDM) or fluorine rubber. In the anode separator 12a and the cathode separator 12b, for example, a metallic separator base member made of stainless steel or the like is press-molded, and thus a reaction flow path is formed in one surface and a cooling water flow path is formed in the opposite surface such that the cooling water flow path and the reaction flow path are alternately aligned. As shown in Fig. 2B, the anode separator 12a and the cathode separator 12b are overlaid to form the cooling water path.

In each of the MEA 11, the anode separator 12a and the cathode separator 12b, holes 41a, 41b, 42a, 42b, 43a and 43b are formed, and they are overlaid to form the anode supply port (anode supply manifold) 41a, the anode discharge port (anode discharge manifold) 41b, the cathode supply port (cathode supply manifold) 42a, the cathode discharge port (cathode discharge manifold) 42b, the cooling water supply port (cooling water supply manifold) 43a and the cooling water discharge port (cooling water discharge manifold) 43b.

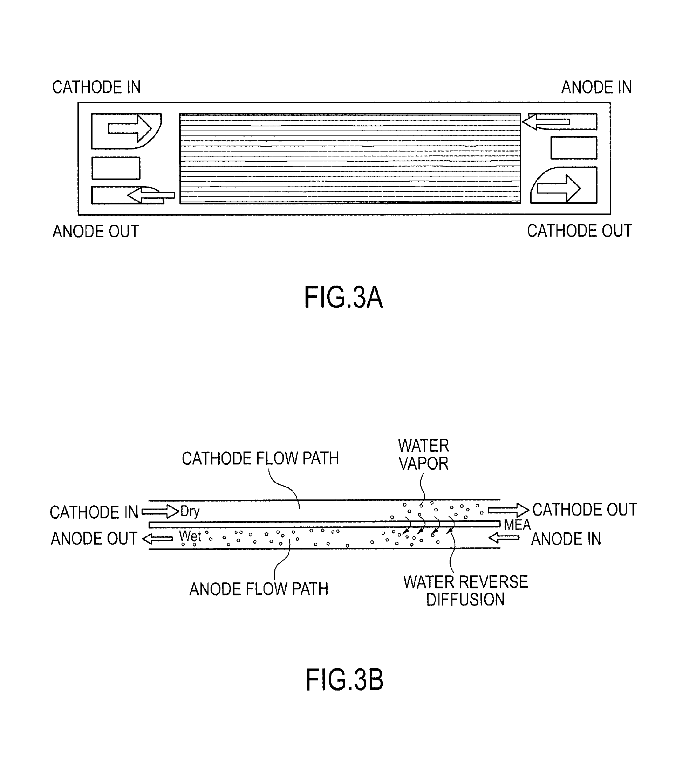

Figs. 3A and 3B are schematic view illustrating the reaction of the electrolytic membrane in the fuel cell stack.

As described above, the fuel cell stack 100 receives the supply of the reaction gas (the cathode gas O₂, the anode gas H₂) to generate power. The fuel cell stack 100 is configured by stacking, in layers, a few hundreds of MEAs (membrane electrode assemblies) where a cathode electrode catalytic layer and an anode electrode catalytic layer are formed on both surfaces of the electrolytic membrane. One MEA of them is shown in Fig. 3A. Here, an example is shown in which the cathode gas is supplied into the MEA (cathode in), while it is being discharged from the diagonal side (cathode out), the anode gas is supplied (anode in) and it is discharged from the diagonal side (anode out).

In each membrane electrode assembly (MEA), the following reactions proceed according to the load at the cathode electrode catalytic layer and the anode electrode catalytic layer to generate power.
[Formula 1]

cathode electrode catalytic layer: *4H*⁺ + *4e⁻* + *O₂ → 2H₂O* (1-1)

anode electrode catalytic layer: *2H₂* → *4H⁺* + *4e⁻* (1-2)

As shown in Fig. 3B, while the reaction gas (the cathode gas O₂) is flowing along the cathode flow path, the reaction of the above formula (1-1) proceeds to generate water vapor. Then, on the downstream side of the cathode flow path, the relative humidity increases. Consequently, the difference in relative humidity between the cathode side and the anode side increases. This difference in relative humidity serves as a driving force, and thus water is reversely diffused to humidify the anode upstream side. This water is further evaporated from the MEA to the anode flow path to humidify the reaction gas (the anode gas H₂) flowing along the anode flow path. Then, it is transported to the anode downstream side to humidify the MEA on the anode downstream side.

In order to efficiently generate power with the above reaction, the electrolytic membrane needs to be in an appropriate wet state. When only a small amount of water is present in the electrolytic membrane, and the wetness of the electrolytic membrane is excessively low, the above reaction is not facilitated. By contrast, when an excessive amount of water is present in the electrolytic membrane, extra water overflows the reaction flow path, with the result that the flow of the gas is inhibited. Also in such a case, the above reaction is not facilitated. Hence, power is efficiently generated on condition that the electrolytic membrane is in an appropriate wet state.

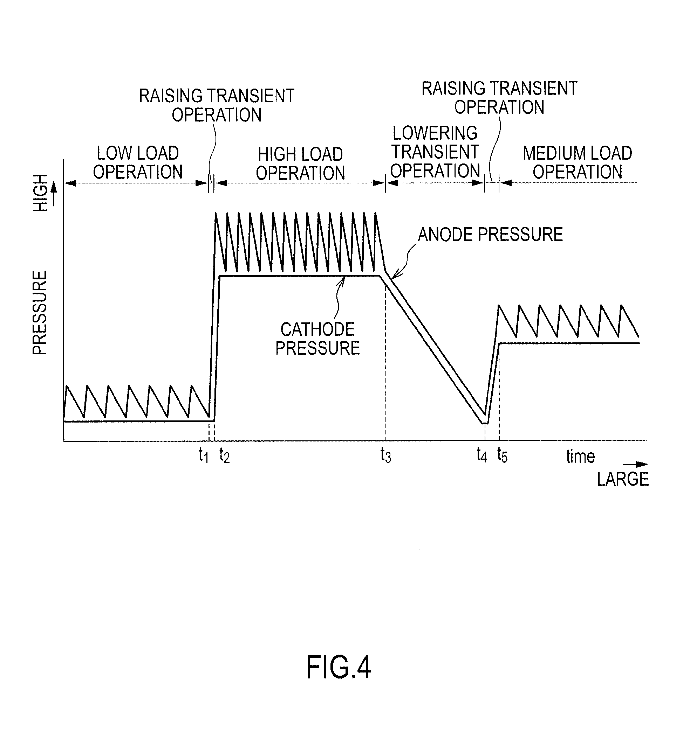

Fig. 4 is a diagram schematically showing the pressure of the reaction gas supplied to the fuel cell stack.

In the fuel cell stack 100, the pressure of the reaction gas (the anode gas, the cathode gas) is set according to variations in required load. Then, the supply and stop of the high-pressure anode gas is repeated by the opening and closing of the pressure adjustment valve 300, and thus the anode gas is pulsed and supplied.

As shown in Fig. 4, when the required load is low, the pressure of the reaction gas (the anode gas, the cathode gas) is set low, and the anode gas is pulsed and supplied. When the required load is increased, the pressure of the reaction gas (the anode gas, the cathode gas) is set high, and the anode gas is pulsed and supplied.

When the pressure of the anode gas is increased, the degree of opening and the valve opening time of the pressure adjustment valve 300 are increased. In this way, high-pressure hydrogen is supplied from the hydrogen tank 200, and thus it is possible to rapidly increase the pressure of the anode gas. Hence, the time of a raising transient operation is short.

However, when the pressure of the anode gas is lowered, with the pressure adjustment valve 300 closed, it is necessary to wait for the consumption of the anode gas H₂ by the reaction of the above formula (1-2). Hence, the time of the transient operation (the lowering transient operation) when the pressure of the anode gas is lowered is long as compared with the time of the raising transient operation. Then, in the lowering transient operation, since the pressure adjustment valve 300 is closed, the pressure of the anode gas is not pulsed. Since the time of the lowering transient operation is long, a place where nitrogen is stagnated (nitrogen stagnation point) is produced in the reaction flow path of the MEA of the fuel cell stack. When nitrogen is stagnated, the concentration of the anode gas at that place is lower than the others. Although such a nitrogen stagnation point is probably produced in a low load operation or a high load operation, since the time during which the pressure adjustment valve 300 is closed is short, it is not problematic.

The nitrogen stagnation point will be described below.

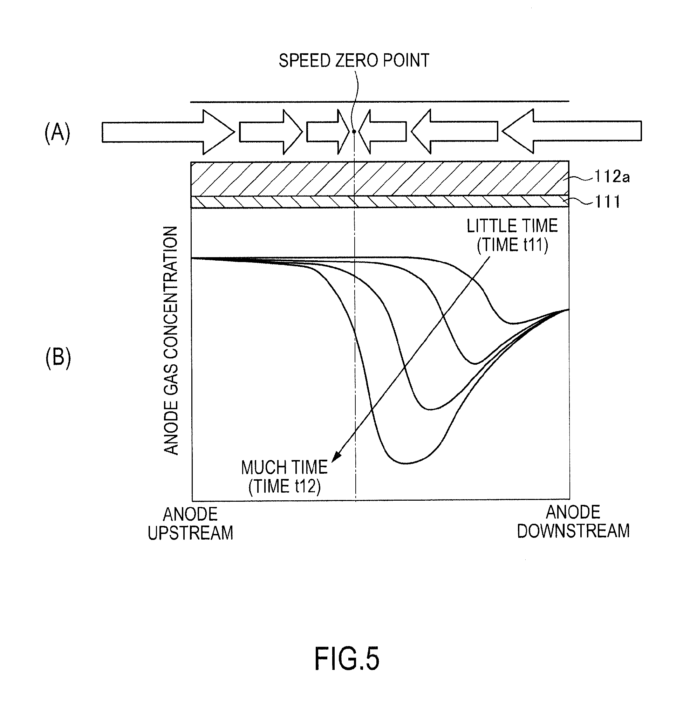

Fig. 5 is a diagram illustrating the mechanism of how the nitrogen stagnation point is produced. Fig. 5(A) shows a cross-sectional view of the reaction flow path of the MEA, and Fig. 5(B) shows a time variation in the concentration of the anode gas in the position of the reaction flow path of the MEA.

Even when the pressure adjustment valve 300 is fully closed, as shown in the right arrow of Fig. 5(A), the anode gas in the anode flow path of the MEA flows to the side of the buffer tank by a pressure difference caused by the consumption of hydrogen (the anode gas). When the anode gas is consumed, the pressure of the anode flow path becomes lower than that of the buffer tank. Consequently, gas occurs that flows backward from the buffer tank to the anode flow path. Since not only hydrogen H₂ but also nitrogen N₂ is stored in the buffer tank, not only the hydrogen H₂ but also the nitrogen N₂ flows backward.

Since the nitrogen N₂ does not react in the catalytic reaction shown in formulas (1-1) and (1-2), it is not consumed. Hence, in the vicinity of the point where the speed is zero, the nitrogen N₂ is built up as the time passes. Consequently, as shown in Fig. 5(B), the concentration of the anode gas H₂ decreases as the time passes.

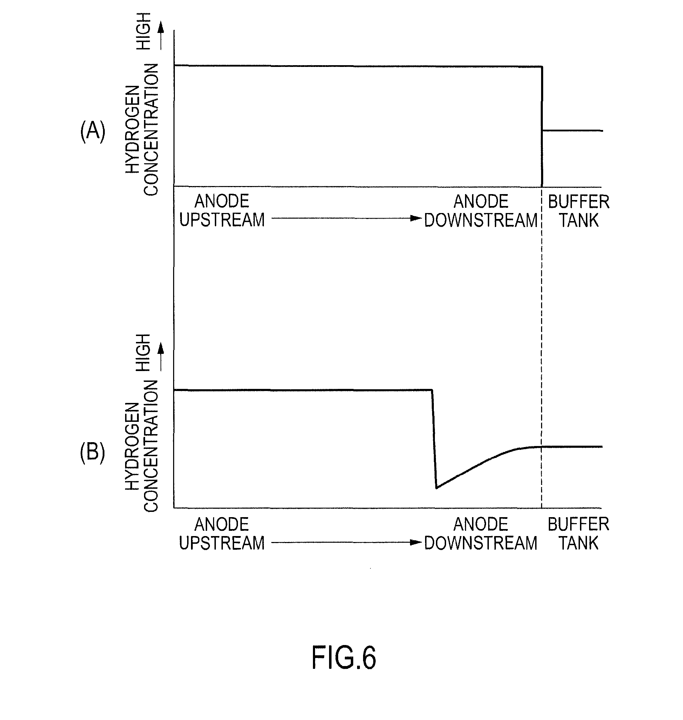

Fig. 6 is a diagram schematically showing the concentration of hydrogen in the anode flow path of the MEA in the low load operation of Fig. 4. Fig. 6(A) shows a state where a pulsation pressure reaches an upper limit pressure, and Fig. 6(B) shows a state where the pulsation pressure reaches a lower limit pressure.

When the pulsation pressure reaches the upper limit pressure, the anode flow path is filled with hydrogen from upstream to downstream. In the buffer tank, nitrogen is also present. Hence, the concentration of hydrogen in the buffer tank is lower than that in the anode flow path.

When the pulsation pressure decreases to reach the lower limit pressure, since the nitrogen stagnation point is present as described above, the concentration of hydrogen decreases in the vicinity of the anode downstream side.

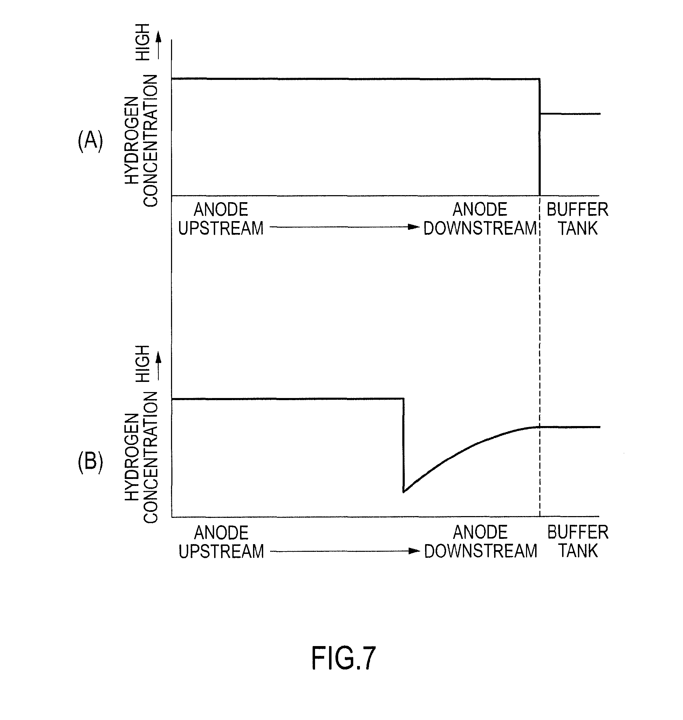

Fig. 7 is a diagram schematically showing the concentration of hydrogen in the anode flow path of the MEA in the high load operation of Fig. 4. Fig. 7(A) shows a state where a pulsation pressure reaches an upper limit pressure, and Fig. 7(B) shows a state where the pulsation pressure reaches a lower limit pressure.

Even in the high load operation, as in the low load operation, when the pulsation pressure reaches the upper limit pressure, the anode flow path is filled with hydrogen from upstream to downstream.

When the pulsation pressure decreases to reach the lower limit pressure, since the nitrogen stagnation point is present as described above, the concentration of hydrogen decreases in the vicinity of the anode downstream side.

In the high load operation, as compared with the low load operation, the nitrogen stagnation point is present in the position of the back of the anode flow path.

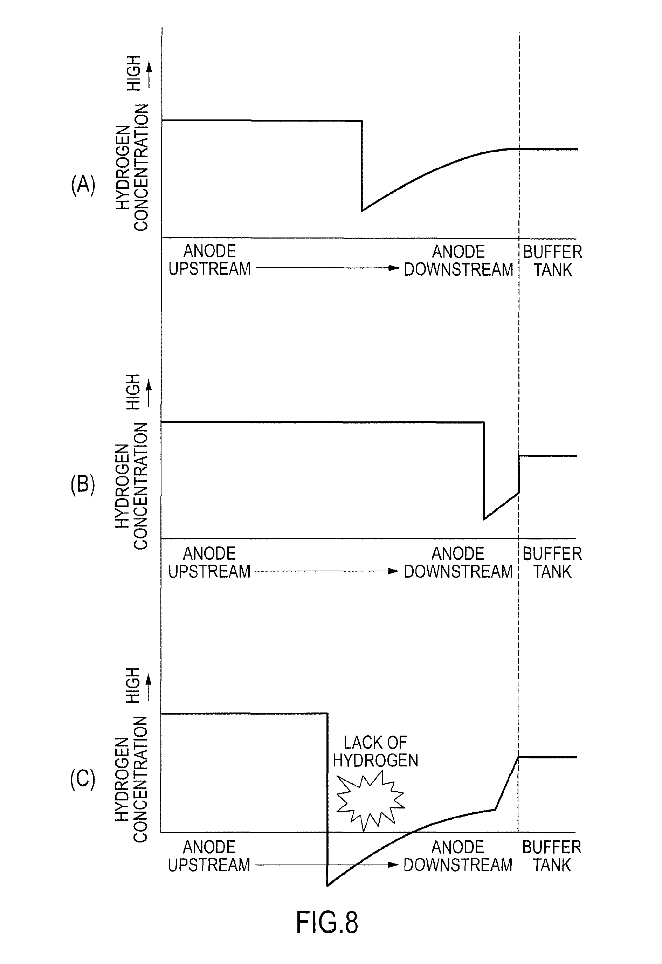

Fig. 8 is a diagram illustrating a problem to be solved in the present embodiment. Fig. 8(A) is a diagram schematically showing the concentration of hydrogen in the anode flow path of the MEA in a state where the lowering transient operation is completed. Fig. 8(B) is a diagram schematically showing the concentration of hydrogen in the anode flow path of the MEA in a state where after the state of Fig. 8(A), in a medium load operation, the pressure of the anode gas increases and thus the pulsation pressure reaches the upper limit pressure. Fig. 8(C) is a diagram schematically showing the concentration of hydrogen in the anode flow path of the MEA in the lowering transient operation after the state of Fig. 8(B).

As shown in Fig. 4, the time of the lowering transient operation is long. Hence, as shown in Fig. 8(A), the nitrogen stagnation point is present in the position of the further back as compared with the position in a state where the pulsation pressure in the high load operation shown in Fig. 7(B) reaches the lower limit pressure.

Even when after such a state, in the medium load operation, the pressure of the anode gas increases, and thus the pulsation pressure reaches the upper limit pressure, as shown in Fig. 8(B), the nitrogen stagnation point is not discharged up to the buffer tank but is left within the anode flow path.

When the lowering transient operation is performed in such a state, the nitrogen stagnation point is pushed into the back of the anode flow path, and nitrogen is further stagnated at the nitrogen stagnation point, with the result that hydrogen is depleted. In such a state, the degradation of the MEA (electrolytic membrane) is facilitated.

In order to solve the problem described above, the inventors have conceived the following control.

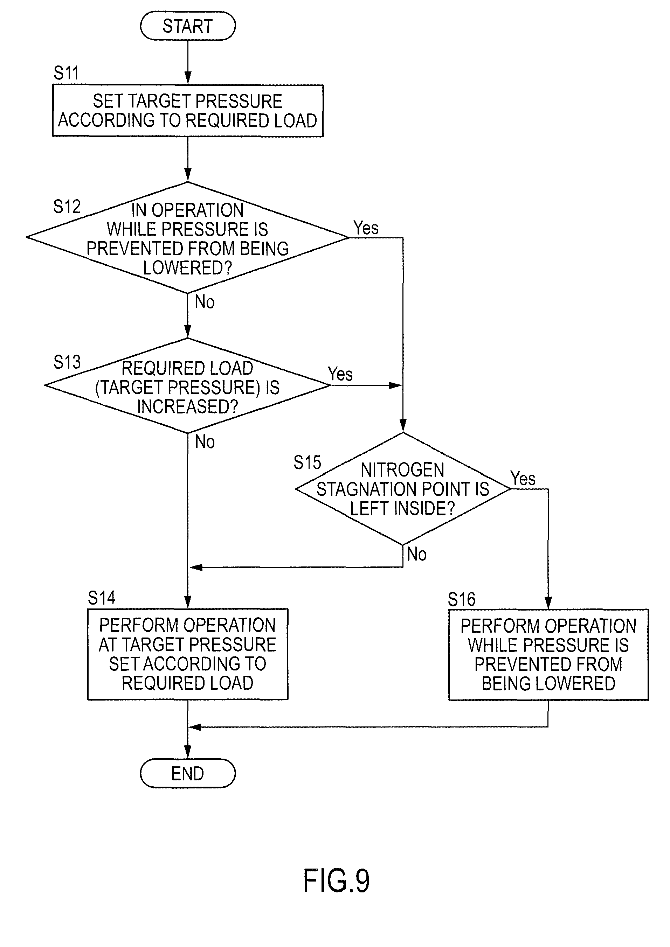

Fig. 9 is a control flowchart that is performed by the controller of the first embodiment of the fuel cell system. The controller repeatedly performs the flowchart every minute time (for example, 10 milliseconds).

In step S11, the controller sets a target pressure according to the required load. The required load is obtained from, for example, the amount of depression of an accelerator pedal by a driver. As the required load is higher, the target pressure tends to be higher. Specifically, a correlation is set in a map through a previously performed experiment or the like, and the required load is applied to the map, with the result that the target pressure is preferably set.

In step S12, the controller determines whether or not the operation is being performed at present while the pressure is prevented from being lowered. If the result of the determination is negative, the controller moves the process to step S 13 whereas if the result of the determination is positive, the controller moves the process to step S15.

In step S13, the controller determines whether or not the required load (the target pressure) increases. If the result of the determination is negative, the controller moves the process to step S 14 whereas if the result of the determination is positive, the controller moves the process to step S15.

In step S 14, the controller performs the operation at the target pressure corresponding to the required load without preventing anything.

In step S15, the controller determines whether or not the nitrogen stagnation point is left in the anode flow path of the MEA. A specific determination method will be described later. If the result of the determination is negative, the controller moves the process to step S13 whereas if the result of the determination is positive, the controller moves the process to step S16.

In step S16, the controller performs the operation while preventing the pressure from being lowered.

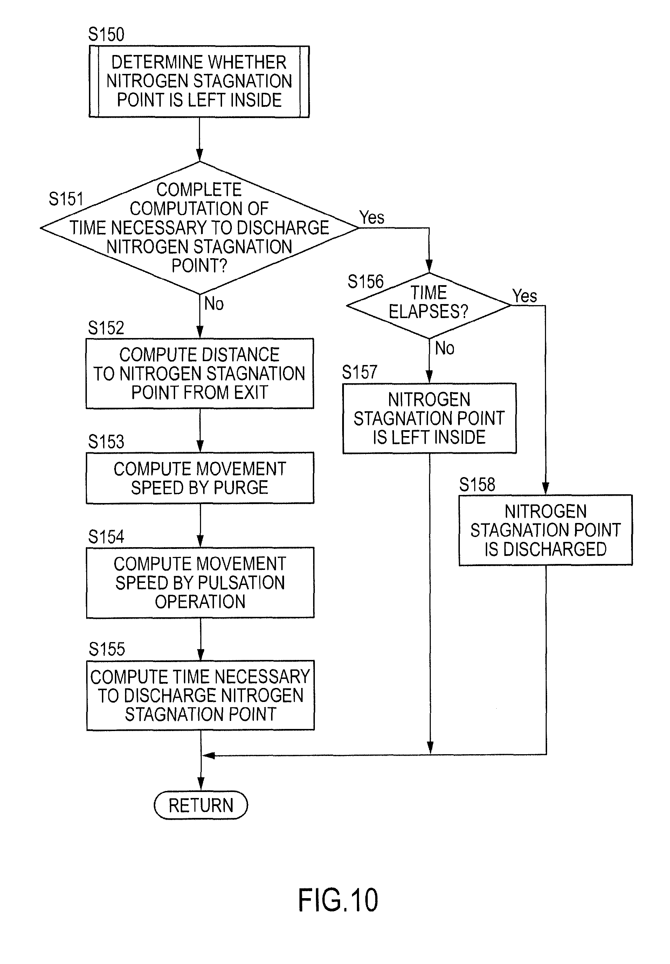

Fig. 10 is a flowchart showing a routine for determining whether or not the nitrogen stagnation point is left in the anode flow path of the MEA.

In step S151, the controller determines whether or not the time necessary to discharge the nitrogen stagnation point is computed. If the result of the determination is negative, the controller moves the process to step S 152 whereas if the result of the determination is positive, the controller moves the process to step S156.

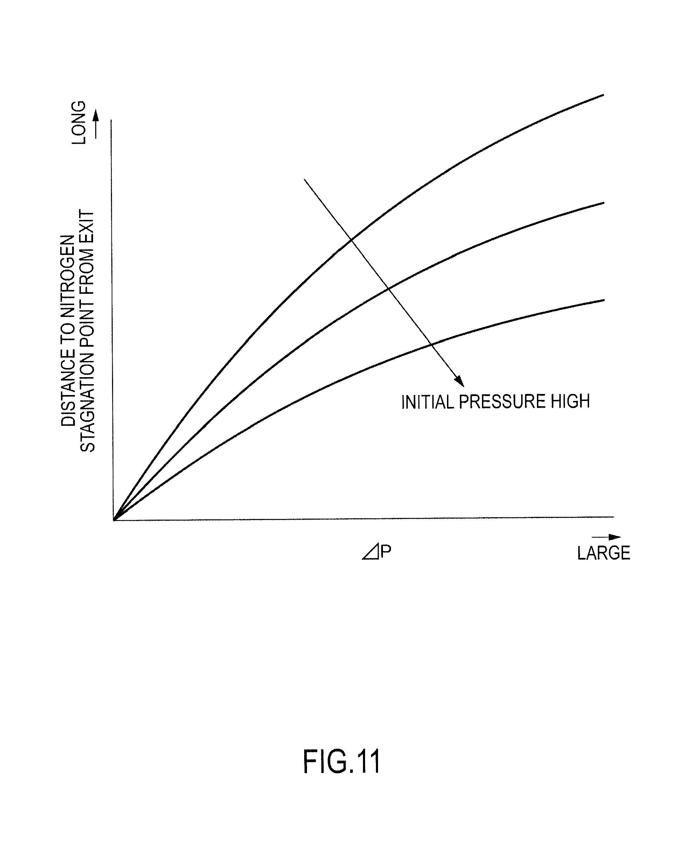

In step S152, the controller computes a distance to the nitrogen stagnation point from an exit. The distance to the nitrogen stagnation point from the exit tends to increase as a pressure decrease (ΔP) increase. Even when the pressure decrease (ΔP) is the same, as the initial pressure is lower, the distance tends to increase (Fig. 11). Hence, such a relationship is set in a map through a previously performed experiment or the like, and based on the map, the distance to the nitrogen stagnation point from the exit is preferably computed.

In step S153, when the purge valve is opened to perform the purge, the controller computes a speed at which the nitrogen stagnation point is moved. As the degree of opening of the purge valve increases, the movement speed of the nitrogen stagnation point tends to increase. As the degree-of-opening time of the purge valve is longer, the movement speed of the nitrogen stagnation point tends to increase. As the operation pressure is higher, the movement speed of the nitrogen stagnation point tends to increase. Hence, such a relationship is set in a map through a previously performed experiment or the like, and based on the map, the movement speed of the nitrogen stagnation point is preferably computed.

In step S154, the controller pulses the pressure to compute the speed at which the nitrogen stagnation point is moved. As the pulsation amplitude increases, the movement speed of the nitrogen stagnation point tends to increase. As the pulsation period decreases, the movement speed of the nitrogen stagnation point tends to increase. Hence, such a relationship is set in a map through a previously performed experiment or the like, and based on the map, the movement speed of the nitrogen stagnation point is preferably computed.

In step S155, the controller computes the time necessary to discharge the nitrogen stagnation point. Specifically, with consideration given to the distance to the nitrogen stagnation point from the exit determined in step S152 and the movement speed of the nitrogen stagnation point determined in steps S 153 and S154, the time necessary to discharge the nitrogen stagnation point is computed.

In step S 156, the controller determines whether or not the time necessary to discharge the nitrogen stagnation point has elapsed. If the result of the determination is negative, the controller moves the process to step S 157 whereas if the result of the determination is positive, the controller moves the process to step S 158.

In step S157, the controller determines that the nitrogen stagnation point is left in the anode flow path of the MEA.

In step S158, the controller determines that the nitrogen stagnation point is discharged from the anode flow path of the MEA.

When the flowchart described above is performed, if the time necessary to discharge the nitrogen stagnation point is not computed, steps from S151 to S152, to S153, to S 154 and then to S 155 are processed, and thus the time necessary to discharge the nitrogen stagnation point is computed.

After the time necessary to discharge the nitrogen stagnation point is computed, until the time has elapsed, it is determined that the nitrogen stagnation point is left in the anode flow path of the MEA by processing steps from S151 to S156 and then to S157. Then, when the time elapses, it is determined that the nitrogen stagnation point is discharged from the anode flow path of the MEA by processing steps from S151 to S 156 and then to S 158.

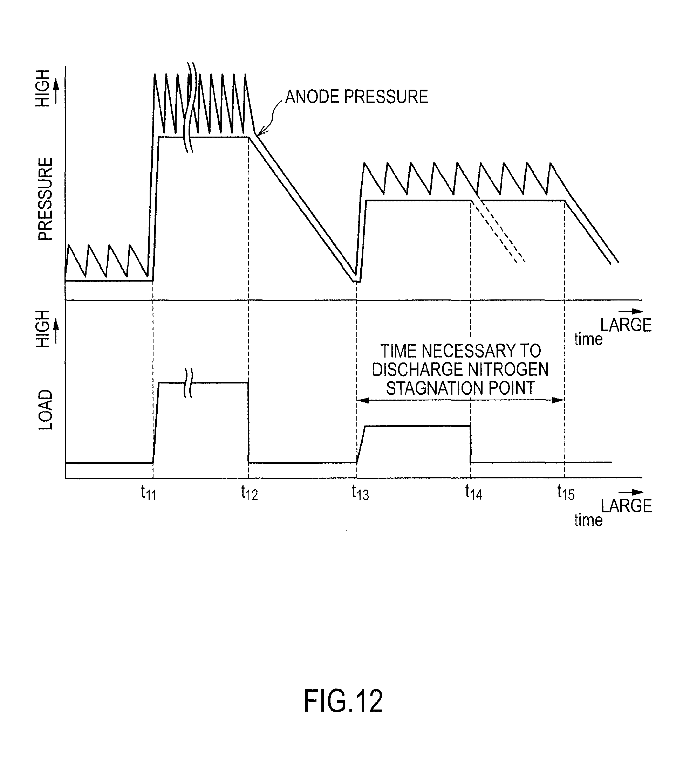

Fig. 12 is a timing chart illustrating the operation when the control flowchart of the first embodiment is performed.

In order to make clear the correspondence to the flowchart described above, S is added to the step number of the flowchart so as to be shown together.

The control flowchart described above is performed to carry out the following operation.

In Fig. 12, before time t11, steps from S 11 to S 12 to S 13 and then to S 14 are repeatedly processed, and thus the operation is performed at the target pressure corresponding to the required load.

At time t11, the required load increases. Here, the nitrogen stagnation point is not left in the anode flow path of the MEA. Hence, steps from S11 to S12 to S13 to S15 and then to S14 are processed, and thus the operation is performed at the target pressure corresponding to the required load. Thereafter, steps from S11 to S12 to S13 and then to S14 are repeatedly processed, and thus the operation is performed at the target pressure corresponding to the required load.

At time t12, the required load decreases. Here, steps from S11 to S12 to S13 and then to S14 are processed, and thus the operation is performed at the target pressure corresponding to the required load. Thereafter, steps from S11 to S12 to S13 and then to S14 are repeatedly processed, and thus the operation is performed at the target pressure corresponding to the required load.

At time t13, the required load increases again. Since the lowering transient operation is performed until immediately before, the nitrogen stagnation point is left in the anode flow path of the MEA. Hence, steps from S11 to S12 to S13 to S15 and then to S16 are processed, and thus the operation is performed while the pressure is prevented from being lowered. Thereafter, steps from S11 to S12 to S15 and then to S16 are repeatedly processed, and thus the operation is performed while the pressure is prevented from being lowered.

At time t14, the required load decreases again. However, at this point, the nitrogen stagnation point is still left in the anode flow path of the MEA. Hence, steps from S11 to S12 to S15 and then to S16 are processed, and thus the operation is continuously performed while the pressure is prevented from being lowered. Consequently, although the required load decreases, the operation is performed with the current pressure maintained without the pressure being lowered.

At time t15, the time necessary to discharge the nitrogen stagnation point has elapsed. In other words, it is determined that the nitrogen stagnation point is discharged from the anode flow path of the MEA. Hence, steps from S11 to S12 to S15 and then to S 14 are processed, and thus the operation is performed at the target pressure corresponding to the required load. Consequently, the pressure is lowered, and the operation is performed. Thereafter, steps from S11 to S12 to S13 and then to S14 are repeatedly processed, and thus the operation is performed at the target pressure corresponding to the required load without the pressure being lowered.

In the present embodiment, when the nitrogen stagnation point is left in the anode flow path of the MEA, even if the required load decreases, the operation is performed without the pressure being lowered while the current pressure is maintained. In this way, it is possible to prevent the following problem: nitrogen is further stagnated at the nitrogen stagnation point that is currently left, and thus hydrogen is depleted, with the result that the degradation of the MEA (electrolytic membrane) is facilitated.

Thereafter, when the nitrogen stagnation point is discharged from the anode flow path of the MEA, the pressure is lowered and the operation is performed, with the result that it is possible to provide the pressure corresponding to the required load. If the operation is continued without the pressure being lowered, fuel efficiency is degraded. However, in the present embodiment, when the nitrogen stagnation point is discharged from the anode flow path of the MEA, the pressure is lowered and the operation is performed, with the result that it is possible to prevent such a problem.

In the present embodiment, whether or not the nitrogen stagnation point is left in the anode flow path of the MEA is determined by computing the time necessary to discharge the nitrogen stagnation point and determining whether or not the time has elapsed. In this way, it is possible to easily perform the determination.

### (Second embodiment)

Even though the nitrogen stagnation point is actually left in the anode flow path of the MEA, if the decrease in the required load is so small that hydrogen is not depleted by lowering the pressure, it is not necessary to prevent the pressure from being lowered. Hence, in a second embodiment, when the pressure is lowered, whether or not hydrogen is depleted is estimated. Then, only when it is possible to estimate that hydrogen is depleted, the pressure is prevented from being lowered whereas when it is possible to estimate that hydrogen is not depleted, the pressure is not prevented from being lowered.

Specific details will be described below.

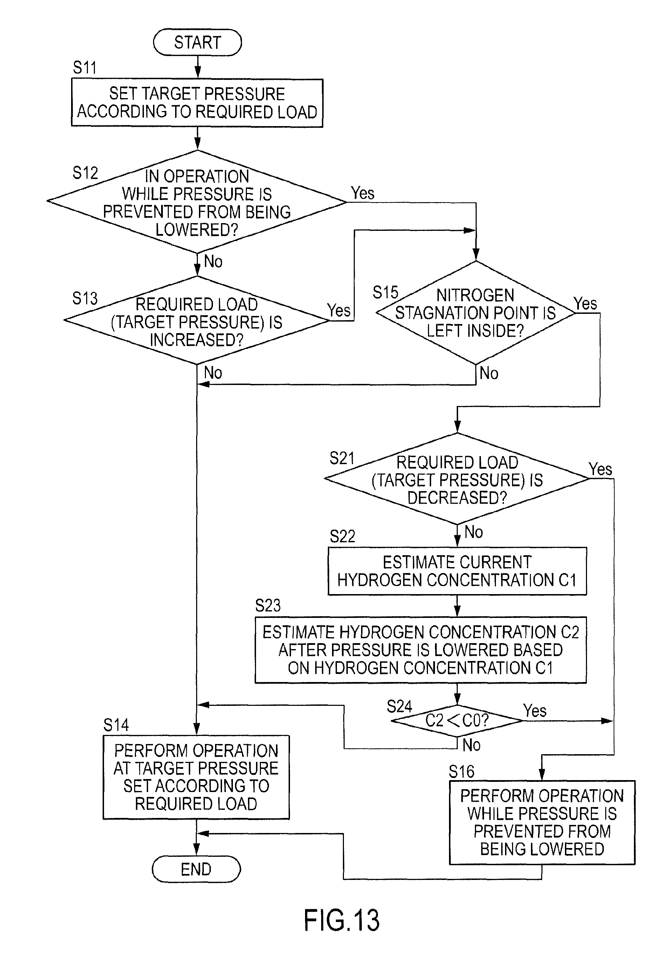

Fig. 13 is a control flowchart that is performed by the controller of the second embodiment of the fuel cell system according to the present invention.

In the following description, parts that have the same functions as described previously are identified with the same symbols, and their description will not be repeated as necessary.

Since steps S11 to S16 are the same as in the first embodiment, their description will be omitted.

In step S21, the controller determines whether or not the required load (target pressure) is lowered. If the result of the determination is negative, the controller moves the process to step S22 whereas if the result of the determination is positive, the controller moves the process to step S16.

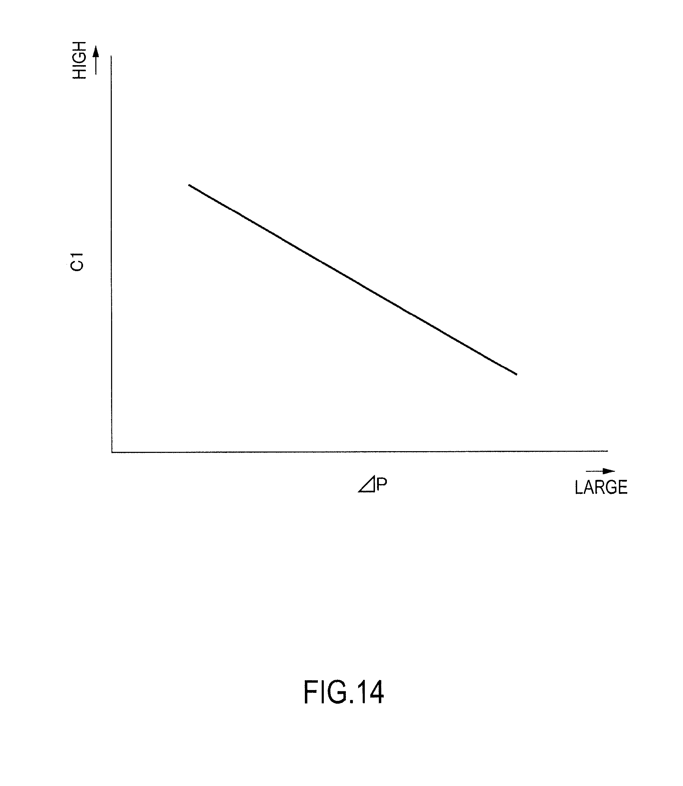

In step S22, the controller estimates a current hydrogen concentration C 1. Specifically, as the valve opening time of the pressure adjustment valve is longer, that is, the pressure decrease (ΔP) is larger, the hydrogen concentration C1 tends to be lower. Hence, such a relationship is set in a map through a previously performed experiment or the like (Fig. 14), and based on the map, the current hydrogen concentration C1 is preferably estimated.

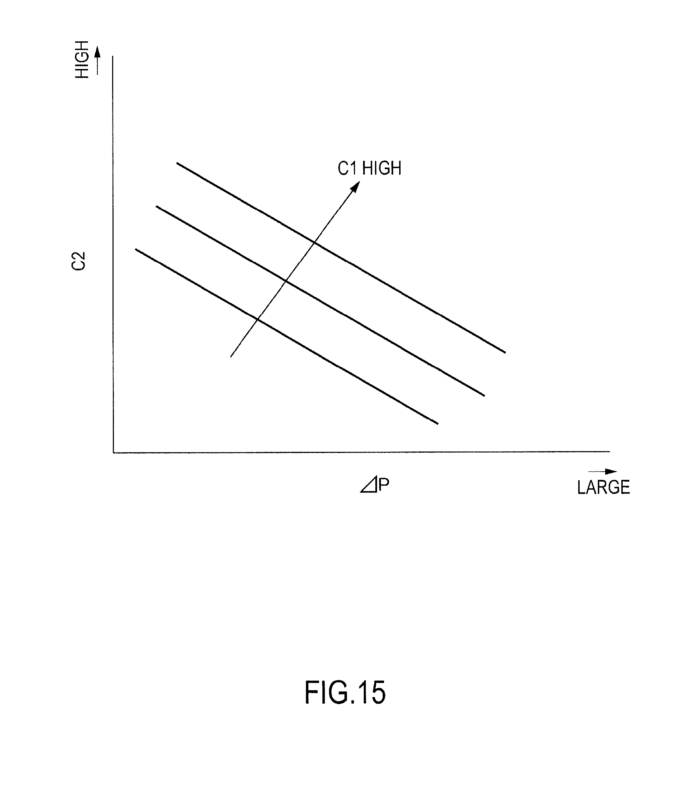

In step S23, the controller estimates, based on the current hydrogen concentration C1, a hydrogen concentration C2 after the pressure is lowered according to the required load. Specifically, as the hydrogen concentration C1 is lower, the hydrogen concentration C2 tends to be lower. As the valve opening time of the pressure adjustment valve is longer, the hydrogen concentration C2 tends to be lower. Hence, such a relationship is set in a map through a previously performed experiment or the like (Fig. 15), and based on the map, the hydrogen concentration C2 is preferably estimated. The initial value of the map used in step S22 is set at the hydrogen concentration C1, and thus the hydrogen concentration C2 may be estimated.

In step S24, the controller determines whether or not the hydrogen concentration C2 is lower than a reference concentration CO. The reference concentration CO is a reference value for determining that even if an error is present in the hydrogen concentration C2, hydrogen is not depleted in the anode flow path of the MEA. Preferably, such a reference value is previously set through an experiment or the like. If the result of the determination is negative, the controller moves the process to step S14 whereas if the result of the determination is positive, the controller moves the process to step S16.

The control flowchart described above is performed to carry out the following operation.

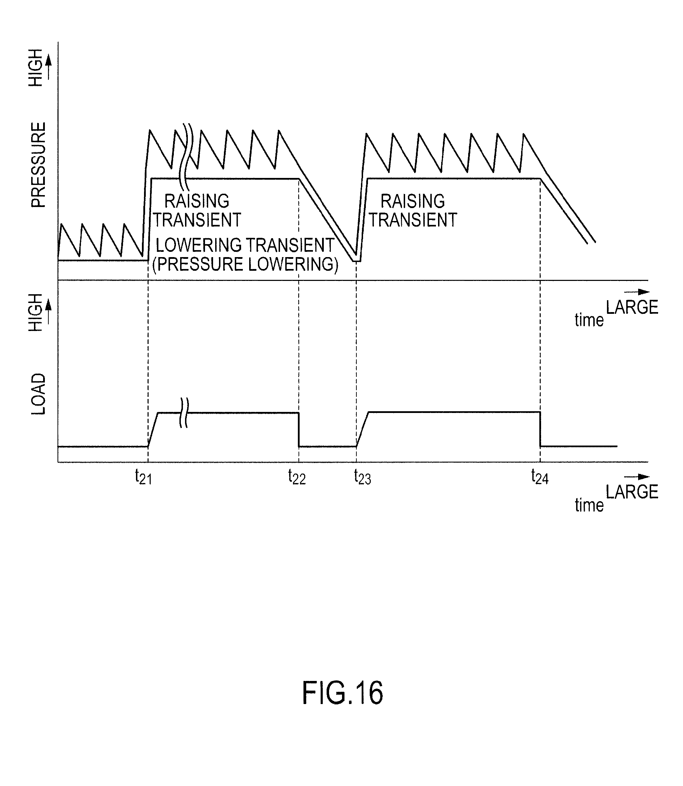

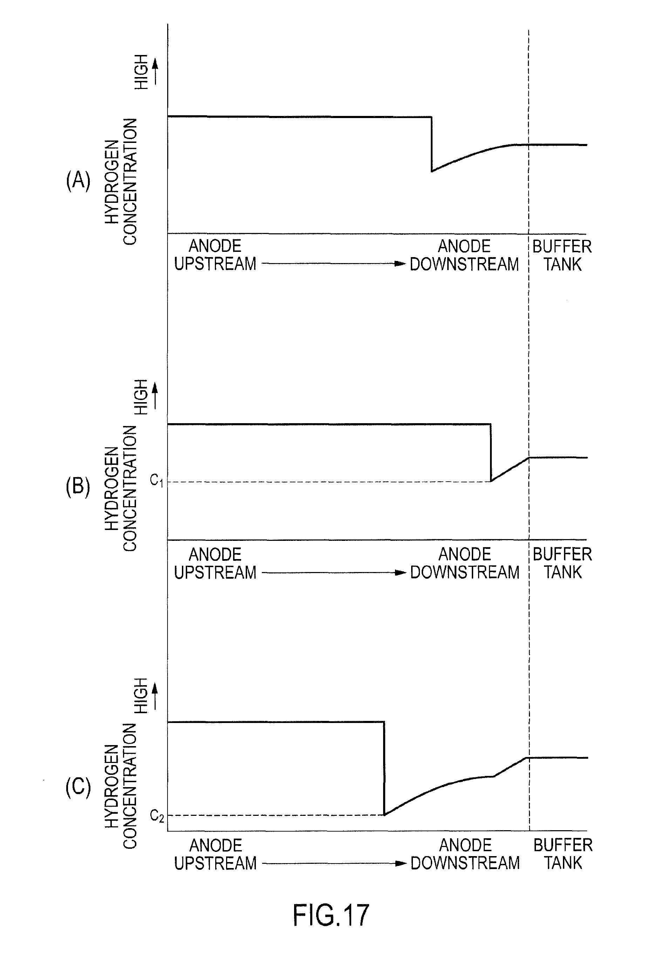

Fig. 16 is a timing chart illustrating the operation when the control flowchart of the second embodiment is performed. Fig. 17 is a diagram schematically showing a hydrogen concentration in the anode flow path of the MEA when the control flowchart of the second embodiment is performed. Fig. 17(A) schematically shows a hydrogen concentration in the anode flow path of the MEA in a state where the lowering transient operation is completed. Fig. 17(B) schematically shows a hydrogen concentration in the anode flow path of the MEA in a state where after the state of Fig. 17(A), the load increases, the pressure of the anode gas is increased and the pulsation pressure reaches the upper limit pressure. Fig. 17(C) schematically shows a hydrogen concentration in the anode flow path of the MEA in a state where after the state of Fig. 17(B), the load decreases, and the pressure of the anode gas is lowered.

In Fig. 16, before time t21, steps from S11 to S12 to S13 and then to S 14 are repeatedly processed, and thus the operation is performed at the target pressure corresponding to the required load.

At time t21, the required load increases. Here, the nitrogen stagnation point is not left in the anode flow path of the MEA. Hence, steps from S11 to S12 to S13 to S15 and then to S14 are processed, and thus the operation is performed at the target pressure corresponding to the required load. Thereafter, steps from S11 to S12 to S13 and then to S14 are repeatedly processed, and thus the operation is performed at the target pressure corresponding to the required load.

At time t22, the required load decreases. Here, steps from S11 to S12 to S13 and then to S 14 are processed, and thus the operation is performed at the target pressure corresponding to the required load. Thereafter, steps from S11 to S12 to S13 and then to S14 are repeatedly processed, and thus the operation is performed at the target pressure corresponding to the required load.

At time t23, the required load increases again. The hydrogen concentration in the anode flow path of the MEA immediately before the required load increases is schematically shown in Fig. 17(A). As described above, the nitrogen stagnation point is left in the anode flow path of the MEA. Then, the hydrogen concentration in the anode flow path of the MEA immediately after the required load increases is schematically shown in Fig. 17(B). Here, steps from S11 to S12 to S13 to S15 to S21 and then to S22 are processed, and thus the current hydrogen concentration C1 is estimated. Then, step S23 is processed, and thus the hydrogen concentration C2 is estimated. Then, step S24 is processed. Here, the hydrogen concentration C2 is higher than the reference concentration CO, and steps from S24 to S14 are processed. Thereafter, steps from S11 to S12 to S13 and then to S14 are repeatedly processed, and thus the operation is performed at the target pressure corresponding to the required load.

At time t24, the required load decreases. Here, steps from S11 to S12 to S13 and then to S14 are processed, and thus the operation is performed at the target pressure corresponding to the required load. Thereafter, steps from S11 to S12 to S13 and then to S14 are repeatedly processed, and thus the operation is performed at the target pressure corresponding to the required load.

The hydrogen concentration in the anode flow path of the MEA immediately after the lowering transient operation is completed is schematically shown in Fig. 17(C). Since the hydrogen concentration C2 is acquired at the nitrogen stagnation point, hydrogen is not depleted. As described above, in the present embodiment, it is possible to perform the operation at the target pressure corresponding to the required load. In other words, the operation pressure is not wastefully maintained to be high. Hence, it is possible to stably generate power without degrading fuel efficiency.

Embodiments of this invention were described above, but the above embodiments are merely examples of applications of this invention, and the technical scope of this invention is not limited to the specific constitutions of the above embodiments.

For example, although in the embodiments described above, whether or not the nitrogen stagnation point is left in the anode flow path of the MEA is determined by computing the time necessary to discharge the nitrogen stagnation point and determining whether or not the time has elapsed, the present invention is not limited to this configuration. Whether or not nitrogen is left may be determined by a nitrogen sensor.

The map used in each computation is simply illustrative. As the items used in the map, appropriate items may be used as necessary.

The embodiments described above can be combined as necessary.

This application claims priority based on Japanese Patent Application No. 2011-259101 filed with the Japan Patent Office on November 28, 2011, the entire contents of which are incorporated into this specification by reference.

## Claims

1. A fuel cell system that includes a load and a fuel cell stack connected to the load and that is configured to supply an anode gas and a cathode gas to the fuel cell stack to generate power according to the load, the fuel cell system comprising:
a pressure setting unit configured to set a pressure of the anode gas higher when the load is high as compared with when the load is low;
a stagnation point determination unit configured to determine, according to a state of power generation of the fuel cell stack, whether or not a nitrogen stagnation point is left in a reaction flow path within the fuel cell stack; and
an operation control unit configured to perform an operation while preventing the pressure of the anode gas from being lowered when a required load is lowered in a state where the nitrogen stagnation point is left.

2. The fuel cell system of claim 1,
wherein the operation control unit is configured to allow the pressure of the anode gas to be lowered when the nitrogen stagnation point is not left after the pressure of the anode gas is prevented from being lowered.

3. The fuel cell system of claim 1 or 2,
wherein the stagnation point determination unit is configured to determine, by whether or not a time necessary to discharge the nitrogen stagnation point has elapsed, whether or not the nitrogen stagnation point is left.

4. The fuel cell system of any one of claims 1 to 3, further comprising:
a concentration estimation unit configured to estimate, when the required load is lowered in the state where the nitrogen stagnation point is left, a hydrogen concentration after the pressure is lowered,
wherein the operation control unit is configured to, when the estimated hydrogen concentration is higher than a reference value, perform the operation without preventing the pressure of the anode gas from being lowered even if the required load is lowered in the state where the nitrogen stagnation point is left.
